# EUROPEAN PATENT APPLICATION

(11) **EP 0 923 871 A1**
(43) Date of publication of application: **23.06.1999**
(21) Application number: 97924034.8
(22) Date of filing: 05.06.1997
(51) Int. Cl.: A23B 4/005, B65B 25/06

(54) **PASTEURIZATION-STERILIZATION PROCESS FOR MEAT PRODUCTS AND PLANT FOR IMPLEMENTING SUCH PROCESS**

(30) Priority: 06.06.1996 ES 9600125
(71) Applicant: CESARE FIORUCCI S.p.A., 00040 Pomezia (IT); METALQUIMIA, S.A., E-17007 Girona (ES)
(72) Inventor: IACOVACCI, Vittorio, I-00040 Pomezia (IT); LAGARES COROMINAS, Narcis, E-17007 Girona (ES)
(74) Representative: Manresa Val, Manuel
(86) International application number: ES9700144
(87) International publication number: WO9746109

(57) **Abstract**

The disclosed process comprises a step for the superficial sterilization of meat pieces (14), which have been previously pasteurized, protected by an envolving medium and subsequently separated from said medium, with removal of exuded fluids and superficial conditioning of said pieces (14), said sterilization being carried out at atmospheric pressure, by displacing the pieces (14) through a tunnel (10), the tunnel having walls which are close to each other and through which heat energy is dispensed to the product and the tunnel (10) having a slit (11) through which protrude props (12) topped by supports (13) associated to a conveyor (30) which are used to transport the meat piece (14) and the wall of the tunnel (10) has an envolving structure (15), with lower bars (16) separated by apertures (17) defining gaps (18) wherein heating resistors (19) are housed.

## Description

### FIELD OF THE INVENTION

This invention relates to an improved pasteurization-sterilization process for meat products applicable to very different types of products for instance a ham or shoulder meat piece previously sustaining boning, additives and/or other several ingredients injection, tenderizing, massaging and curing processes. The invention also relates to a plant to implement said process.

Processes of above type generally comprises a first meat piece pasteurization step said meat piece being arranged within hard or half-hard containers (molds) and protected by a wrapping means (envelopes or bags), through dipping it in hot water or steam furnace treatment, and cooking said meat piece until it reaches at its thermal center a temperature ranging from 65 to 75° C and during a period of time depending on the piece size sufficient for pasteurizing the product which provides steam heating effects (value F 10° C _{70°C}) over 30 measured at the piece thermal center.

After said step, it is proceeded to withdraw the pasteurized meat piece from its wrapping means, to eliminate fluids exudated during the product process and conditioning for example grading and improving its surface appearance, cutting meat slices, etc. according to consumption requirements, the products being re-packed after said operations.

But referred product conditioning operations involve meat piece re-contamination because of the meat exposure to the environment or its contact with contaminated objects such as machines, conveyor bands and staff hands.

When vacuum packing the products said contamination spread is prevented. However, already present microorganisms remain within the wrapping means and have a negative influence on foods safety and preservation period of time.

Therefore, thereafter a further thermal treatment step is required, which is typically known as "commercial pasteurization" and which involves reducing microbiologic charge reduction, by carrying out a suitable thermal treatment to the packed product.

### BACKGROUND OF THE INVENTION

The document EP-A-0506599 proposes for carrying out said further pasteurization, a HTST technique (high temperature short time), bearing in mind that in the second conditioning step of above product, only a superficial contamination has occured on the product, therefore a direct thermal treatment affecting the whole surface of the product was checked to be effective to provide referred microbiologic charge reduction.

Referred document EP-A-0506599 proposes for such aim to introduce the meat pieces within a chamber, susceptible of tight sealing, in whose interior said thermal shock occurs, by means of high temperature and pressure steam supply, proceeding thereafter to pack said products in a sterile atmosphere.

### SUMMARY OF THE INVENTION

The improvements according to the invention are on the ground of carrying out said further pasteurization step through HTST technique, under atmospheric pressure, by displacing said products through a tunnel, from the walls of which, very close to the product, thermal energy is directly distributed on the product surface.

According to the process disclosed, the piece will be introduced in said tunnel without its end wrapping means, or already re-packed in vacuum or in a modified atmosphere according to the type of product it is dealt with.

The invention also relates to a plant provided for implementing the process, said plant comprising a steam flash pasteurizer which takes profit of the steam condensation phenomenon directly obtained on the surface of the product to be pasteurized, so that it provides it, in a very short period of time, with a high amount of heat, preventing the body to be also reheated in its interior.

It is well-known, in fact, that the water in steam state contains a significant amount of heat which, in 99° C condensation step, it delivers to the environment and to the cooler adjacent bodies. For example, each kg of saturated steam at 4 atmospheres and 142° C possesses a total heat content equal to 654 Kcal, compared with 100 Kcal of water at 100° C. Therefore, 1 kg of steam, lead from 142° C and 4 atmospheres to 99° C and 1 atmosphere as water consequently delivers almost 550 Kcal through its condensation.

For this reason, it was thought to take profit of said steam condensation thermal power in order to obtain a superficial pasteurization and it was checked that, if the body to be pasteurized is in an environment at atmospheric pressure, the steam tends to condensate as soon as it exits from the introduction duct or directly within the duct itself, and that to the surface of the body to be treated only a mixture of wet air arrives which contains a much lower heat content than that of the steam. In addition, because of the interposition of air between the steam and the body to be pasteurized, heat transmission is also much slower and a period of time is required to carry out an effective thermal treatment.

Subsequently, the conclusion was reached that, to overcome this drawback and to reach the objective in said circumstances, it is necessary to perform it so that the steam quickly reaches the body to be pasteurized and is quickly condensated on its surface with as little dissipation as possible.

### BRIEF DESCRIPTION OF THE DRAWINGS

Other characteristics and advantages of the invention will become apparent from the more detailed explanation below of a non limitative example of embodiment which illustrates the principles of the invention with the assistance of the drawings.

Said drawings show:
- Fig. 1: a cross section of a tunnel for the products superficial sterilization;
- FIG. 1a: an enlarged view of detail Ia, marked by means of a circle at Fig. 1, of the wall of said tunnel;
- FIG. 2: a schemmatized, side elevation view of the plant, with details of the means for introducing steam in the interior of the tunnel and for exhausting said steam after it heating, circulation through said tunnel and contact with the meat piece;
- FIG. 3: a part, longitudinal sectional view of said tunnel wall through the cutting line III - III of Fig. 1;
- FIG. 4: plan view illustrating the two chambers forming said tunnel.

### DESCRIPTION IN DETAIL OF A PREFERRED EMBODIMENT

According to these figures the plant for implementing the process according to the invention comprises:
- a tunnel (10) having a rounded cross section, determining a tubular shell, with a longitudinal slit (11) along its whole base area crossed by props (12) (with possibility of rotation aroung their geommetrical axis) topped out by supports (13) to carry the meat piece (14), said props (12) being associated to linear displacing means such as a screw conveyor (30);
- the wall of said tunnel (10) possesses a structure composed of a first continuous external shell (15), under which a plurality of longitudinal generatrix adjacent metallic bars (16) are extending, having an approximately triangular or trapezoid inwardly narrowed section, with a vortex, protrusion or smaller side inwardly oriented, constituting as a whole a second shell, cocentric to the first one (15), exterior, the bars (16) of which are slightly apart from each other, delimitating slots (17) and internally defining gaps (18);
- a plurality of heating resistors (19), housed in said internal gaps (18), close to said bars (16);
- an internal gunspunched wall (20) which internally delimits said resistors (19) and forms a third shell;
- one or several nozzles (21a, 21b) to supply steam, which ends in a chamber (22) defined between the first external continuous shell (15) and said longitudinal bars (19);
- a casing (23) which surrounds the whole tunnel to advantageously exhaust the steam through ducts (24a, 24b) existing at the ends and a central duct (24c).

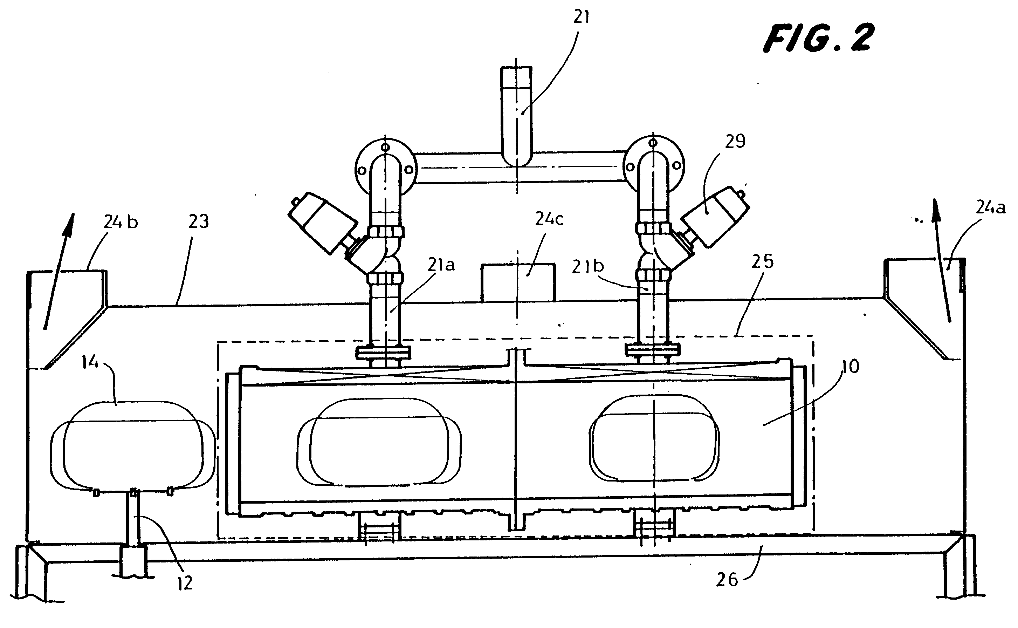

Above the external wall (15) a wrapping sleeve in thermal insulating material (25) has been provided, represented by a dotted line in figure 2.

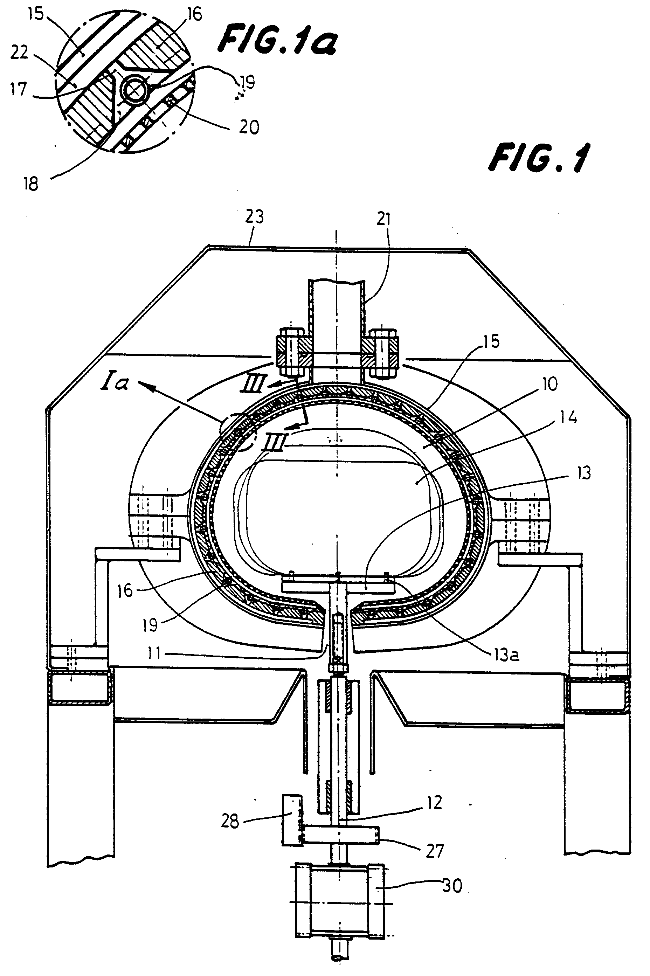

As shown in figure 1, said support (13) comprises supporting stubs (13a), to obtain minimum contact (reducing contamination) with the meat piece (14).

For the purpose of providing an effective control of the resistors (19) temperature and, in addition, of steam re-heated because of passing through said slots (17) and gaps (18), between said wrapping bars (16) and said resistors (19), probing rods (not shown) are provided extending in the gap between bars where said resistors are located, advantageoulsy embebded through the tunnel two end areas.

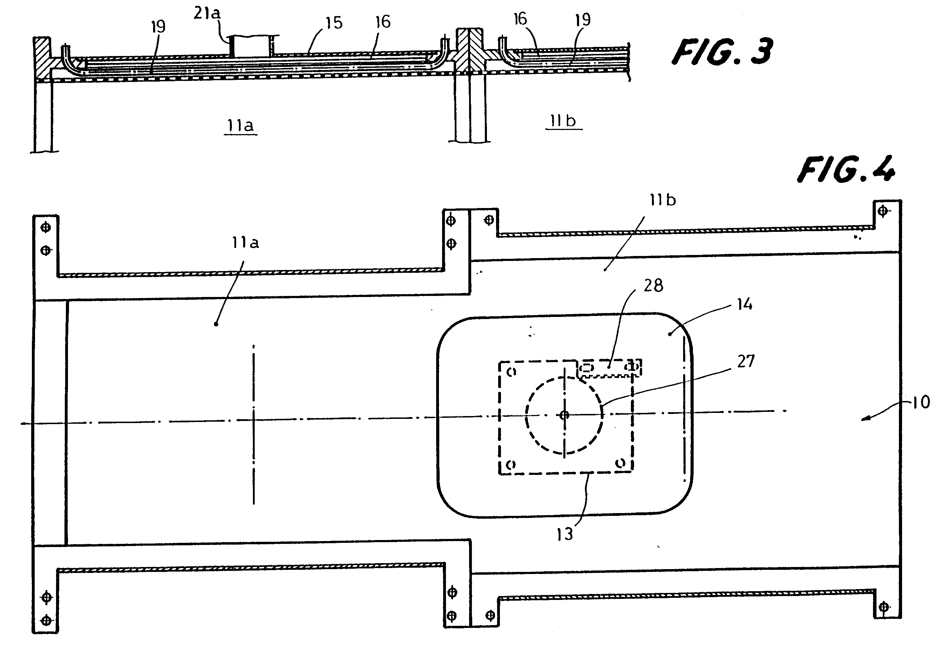

In the example of embodiment shown in said figures, tunnel (10) comprises two chambers (11a, 11b), longitudinally continuously linked, having different width (see figure 3) and also means to provide prop (12) of support (13) for meat piece or product (14) with one or several rotations during its displacment through said tunnel (11), consisting in a pinion (27) and rack (28) mechanism, gearing of which occurs at one step of said displacement.

In figure 4, it can also be seen that the steam is introduced in the interior of the tunnel from a constant but adjustable pressure network, through a duct (21) which is divided into two branches (21a) and (21b) constituting the two above nozzles, each ending in a related chamber (22) existing between the external wall (15) and the series of longitudinal bars (16). Are also shown valves (29) for controlling incoming steam pressure.

A plant has also been provided which may comprises doors or panels at the ends of tunnel (10) which may fully or partly close it, during a certain period of time, after introducing the meat pieces.

The plant also comprises means for controlling the steam flow, as well as means to adjust the displacement speed of props (12) and supports (13) through the tunnel.

In the case of bare meat pieces (14) treatment, the plant will in addition include means, such as mouthpieces (not shown) oriented to supply sterilized air to the tunnel (10) exit in order to provide a product drying step before its end packing.

## Claims

1. Improved pasteurization-sterilization process for meat products , including following steps:
a) pasteurization of the meat piece (14) arranged within hard or half-hard containers and/or protected by an envolving medium;
b) taking said pasteurized meat piece (14), apart from its envolving medium, removing exuded fluids and superficial conditioning of said meat piece (14) according to consumption requirements;
c) sterilization of superficial layer or stratum of the meat piece (14), by submitting it to a thermal shock according to HTST technique, (high temperature/short time);
wherein said superficial sterilization step is carried out during the displacement of said meat piece (14) through a tunnel (10);
characterized in that said thermal shock is carried out by water steam injection under atmospheric pressure, said steam being re-heated at its passing through a wall of said tunnel and directly injected on the external surface of the meat piece (14) and in that said tunnel wall is positioned very close to the meat piece (14) so that the re-heated steam quickly reaches the meat piece to be pasteurized and quickly condensates on its surface with a little dissipation.

2. Process, according to claim 1, characterized in that during the displacement of the meat piece (14) through said tunnel (10) a rotation step of the meat piece is achieved within the tunnel (10) to fully expose its surface to the heat energy, so that the thermal shock affects the whole superficial stratum of said meat piece (14).

3. Process according to claim 1, characterized in that treatment time is defined by the selection of a suitable displacement speed of the meat pieces (14) through the tunnel (10).

4. Process, according to claim 1, characterized in that treatment period of time comprises a series o intermittent stops of the meat pieces (14) with incidental closing of the tunnel (10) ends.

5. Plant for implementing a process according to any of claims 1 to 4, characterized in that it comprises:
- a tunnel (10) having a rounded cross section, determining a tubular envolving medium, with a longitudinal notch (11) though which are passing props (12) topped out by supports (13) for the meat piece (14), associated to linear displacement means (30);
- the wall of said tunnel possesses a structure composed of a first external, continuous envolving medium (15), under which a plurality of longitudinal, adjacent, triangular section metallic bars (16), with an outwardly oriented protruding profile or edge, constituting a second envolving medium, whose bars (16) are slightly apart from each other, providing notches (17) and internally defining gaps (18);
- a plurality of heating resistors (19) housed in said internal gaps (18), close to said bars (16);
- a gangspunched internal wall (20), which delimits said resistors (19) and forming a third envolving medium;
- one or several nozzles (21a, 21b) for supplying steam, which ends in a chamber (22) defined between the first external, continuous, envolving medium (15) and said longitudinal bars (16);
- a casing (23) which covers the tunnel unit (10) with ducts (24a, 24b, 24c) to exhaust the steam.

6. Plant, according to claim 5, characterized in that it includes means for controlling heating resistors (19) and steam re-heated temperature when this later is passing though said notches (17) between said envolving bars (16) and said resistors (19), said means comprising probing rods plugged in the gap (18) between bars (16) where said resistors (19) are housed.

7. Plant, according to claim 5, characterized in that means have been provided to control steam flow.

8. Plant, according to claim 5, characterized in that it comprises means to regulate props (12) and supports (13) displacement speed.

9. Plant, according to claim 5 characterized in that it comprises means to provide the meat piece (14) support (13) prop (12) one or several rotations during its displacement through the tunnel, comprising a mechanism such as a pinion (27) and a rack (28).

10. Plant, according to claim 9 characterized in that said tunnel (10) comprises at least two compartments (11a), (11b) having a different width, in order to allow that at one of them said support (13) with the meat piece (14) rotates.

11. Plant, according to claim 5,characterized in that it comprises means to supply sterilized air to the tunnel exit to proceed to a drying step of the meat piece (14) before its end canning.

12. Plant, according to claim 5 characterized in that it comprises means to selectively obturate the tunnel ends.
